# FASCICULE DE BREVET EUROPEEN

(11) **EP 4 144 269 B1**
(45) Date de publication et mention de la délivrance du brevet: **05.06.2024**
(21) Numéro de dépôt: 22190538.3
(22) Date de dépôt: 16.08.2022
(51) Int. Cl.: A47J 31/00, A47J 31/14, A47J 43/07, A47J 43/12

(54) **PROCEDE DE PREPARATION D'UNE BOISSON TRES CHAUDE DANS UN RECIPIENT A PARTIR D'UNE MACHINE DE DISTRIBUTION DE BOISSONS**
VERFAHREN ZUR ZUBEREITUNG EINES SEHR HEISSEN GETRÄNKS IN EINEM BEHÄLTER AUS EINEM GETRÄNKEAUTOMATEN
METHOD FOR PREPARING A VERY HOT BEVERAGE IN A CONTAINER FROM A BEVERAGE DISPENSING DEVICE

(30) Priorité: 01.09.2021 FR 2109156
(43) Date de publication de la demande: 08.03.2023
(73) Titulaire: SEB S.A., 69130 Ecully (FR)
(72) Inventeur: MORIN, Gilles, 69134 Ecully Cedex (FR); RUSSIER, Fabien, 69134 Ecully Cedex (FR)
(74) Mandataire: SEB Développement

(56) Documents cités:
- EP-A1- 3 626 136
- WO-A2-2010/035091
- CN-A- 105 193 259
- DE-A1-102004 063 278

## Description

### Domaine technique

La présente invention concerne la réalisation de boissons très chaudes dans un récipient à partir d'une machine de distribution de boissons. Par boissons très chaudes, il faut comprendre des boissons dont la température est au moins de 80°C. La boisson peut être par exemple à base de thé noir, nécessitant une eau très chaude de l'ordre de 85°C à 95°C, ou toute autre boisson qui nécessite une température d'eau d'au moins 80°C pour effectuer un traitement efficace du ou des ingrédients rentrant dans la composition de ladite boisson et, ainsi, en extraire toute la saveur.

### Etat de la technique

Les machines de distribution de boissons à base d'eau chaude sont répandues. Certaines de ces machines de distribution de boissons comportent un circuit de commande, un générateur d'eau chaude et/ou de vapeur et un dispositif d'agitation rotatif comprenant un outil rotatif autour d'un axe vertical et destiné à coopérer avec une boisson contenue dans un récipient afin de préparer cette boisson, ledit dispositif d'agitation rotatif comportant un conduit d'acheminement d'eau chaude et/ou de vapeur vers l'outil rotatif.

Certaines préparations de boissons à base d'un ingrédient, par exemple du thé ou café, nécessitent une eau très chaude, d'au moins 80°C, afin d'infuser correctement et de libérer tout leur arôme durant l'infusion. Traditionnellement, l'eau très chaude est déversée dans un récipient posé sur une base de la machine de distribution, l'ingrédient étant placé dans le récipient. L'ingrédient peut être en vrac et placé dans un filtre du type panier ou boule à infuser ou être préconditionné dans un sachet filtrant. Durant le déversement de l'eau très chaude dans le récipient, celle-ci perd très rapidement plusieurs degrés de température ; il en résulte que l'eau dans le récipient n'est bien souvent pas assez chaude pour obtenir une infusion correcte de l'ingrédient.

Dans le brevet européen EP2667756B1, la machine de distribution de boissons comprend une base chauffante sur laquelle repose le récipient lors du déversement de l'eau chaude, ladite base chauffante permettant de réchauffer le fond du récipient et le liquide contenu dans celui-ci durant l'infusion. Un dispositif d'agitation rotatif peut éventuellement être plongé dans le récipient et actionné pour mélanger le liquide et extraire convenablement les arômes de l'ingrédient. Le document CN105193259A1 décrit un procédé de préparation d'une boisson avec une machine ayant un dispositif d'agitation rotatif.

### Résumé de l'invention

La présente invention a pour premier objectif d'extraire tous les arômes de l'ingrédient durant l'infusion en préservant une eau très chaude, c'est-à-dire une eau dont la température est au moins de 80°C, afin de pouvoir répondre à toutes les températures d'eau préconisées selon les différents ingrédients à infuser, par exemple, des thés verts ou noirs ou des cafés, voire pour des substances à diluer telles que de la poudre de lait ou de chocolat. Ainsi, le procédé permet un usage convenable de la machine de distribution de boissons pour une variété très large de boissons à préparer.

Un second objectif de l'invention est d'éviter des éclaboussures de la boisson très chaude durant la préparation de celle-ci. La demanderesse a en effet constaté que la préparation d'une boisson très chaude, atteignant ou dépassant les 80°C, engendre des bulles dans le récipient durant le réchauffage du liquide contenu dans celui-ci, ces bulles étant projetées hors du récipient et pouvant salir le plan sur lequel repose la machine de distribution de boissons, voire brûler la personne durant la préparation de sa boisson.

Un troisième objectif est de réduire le temps de préparation de la boisson en infusant plus rapidement l'ingrédient dans le récipient.

A ce titre, l'invention concerne un procédé de préparation d'une boisson très chaude dans un récipient à partir d'une machine de distribution de boissons. La machine de distribution de boissons comporte un circuit de commande, un générateur d'eau chaude et/ou de vapeur et un dispositif d'agitation rotatif comprenant un outil rotatif autour d'un axe A et destiné à coopérer avec une boisson contenue dans le récipient durant sa préparation. Le dispositif d'agitation rotatif comporte un conduit d'acheminement d'eau chaude et/ou de vapeur vers l'outil rotatif.

Selon l'invention, le procédé comporte les étapes suivantes :
a) placer le récipient sur un support, sous le dispositif d'agitation rotatif puis placer l'outil rotatif dans ledit récipient ;
b) sélectionner et lancer une préparation de boisson à base d'eau très chaude à partir du circuit de commande
c) injecter dans le récipient un volume V d'eau chaude par le conduit d'acheminement d'eau chaude et/ou de vapeur.

Selon l'invention, ledit procédé comporte après l'étape c), une étape d) consistant à injecter de la vapeur par le conduit d'acheminement pour amener l'eau à une température supérieure ou égale à 80°C. Puis, pendant l'étape d), une étape d1) consistant à mettre en marche l'outil rotatif pour agiter la préparation et casser les bulles qui se forment dans ladite préparation sous l'action de la vapeur et ainsi éviter les projections hors du récipient.

Ainsi, contrairement au brevet européen EP2667756B1 précité, le réchauffement de l'eau dans le récipient s'effectue en injectant de la vapeur directement dans cette eau durant la préparation de la boisson, et non en réchauffant le fond du récipient au moyen d'une base chauffante sur la machine. Le procédé selon l'invention permet ainsi l'usage d'une machine de préparation de boissons plus simple - sans base chauffante - en parvenant à un résultat similaire. Le réchauffement de l'eau directement dans le récipient au moyen de vapeur permet d'atteindre aisément une température de 95°C, nécessaire pour obtenir une parfaite infusion de certains ingrédients, en particulier de certains thés noirs. L'agitation de l'eau très chaude dans le récipient durant le réchauffement par la vapeur permet de casser les bulles se formant dans ledit récipient, évitant ainsi des projections de la préparation de boisson très chaude hors du récipient.

Selon une réalisation préférée du procédé de préparation d'une boisson très chaude objet de l'invention, à l'étape d), on injecte de la vapeur par le conduit d'acheminement pour amener l'eau à une température supérieure à 90°C. L'injection de vapeur s'effectue pendant un temps proportionnel à la quantité d'eau versée dans le récipient afin d'atteindre une température supérieure à 90°C, le circuit de commande étant programmé à cet effet.

Selon le procédé de préparation d'une boisson très chaude objet de l'invention, pendant l'étape d1), l'outil rotatif est mis en marche de manière continue à une vitesse v1. De préférence, la durée de l'étape d) est égale à la durée de l'étape d1). On pourrait toutefois prévoir une variante du procédé selon laquelle l'étape d1) serait démarrée un lapse de temps après le début de l'étape d), ce lapse de temps étant programmé sur le circuit de commande et correspondant à un temps estimé du début de formation de bulles dans le récipient après le déclenchement de la vapeur et en fonction du volume V d'eau chaude déversé dans le récipient.

Selon une réalisation du procédé de préparation d'une boisson très chaude, la boisson réalisée comporte un ingrédient à infuser pouvant être introduit dans le récipient à l'étape a) ou après l'étape c). En outre, le procédé comporte à la fin de l'étape c), une étape c1) consistant à mettre en marche l'outil rotatif pendant l'infusion de l'ingrédient, permettant une infusion plus rapide en agitant l'ingrédient à infuser.

De préférence, pendant l'étape c1), l'outil rotatif est mis en marche de manière intermittente à une vitesse de rotation v2, l'outil rotatif étant mis en marche pendant un temps T1 et arrêté pendant un temps T2. De préférence, le rapport entre le temps T1 et le temps T2 est supérieur à 0,1.

De préférence, pendant l'étape d1), l'outil rotatif est mis en marche de manière continue à une vitesse de rotation v1. En outre, le rapport entre la vitesse v1 et la vitesse v2 est supérieur à 0,5.

De préférence, l'ingrédient à infuser, notamment des feuilles de thé, est placé dans un panier de réception que comporte le récipient. Le panier de réception est placé de manière amovible dans le récipient et reçoit l'ingrédient à infuser.

Selon une réalisation du procédé de préparation d'une boisson très chaude, l'ingrédient à infuser est du thé noir. En outre, à l'étape d) on injecte de la vapeur par le conduit d'acheminement pour amener l'eau à une température supérieure à 90°C.

Selon le procédé de préparation d'une boisson très chaude, l'agitation est mise en oeuvre avec un outil rotatif qui comporte une ailette périphérique. Cela permet d'éviter que la substance à infuser ne se prennent dans l'outil rotatif durant l'agitation, notamment lorsqu'il s'agit d'un ingrédient tel que des feuilles de thé en vrac.

### Brève description des figures

La description suivante met en évidence les caractéristiques et avantages de la présente invention. Cette description s'appuie sur des figures, parmi lesquelles :
La figure 1 illustre en perspective un mode de réalisation d'une machine de distribution de boissons avec un récipient placé sur la machine et le dispositif d'agitation rotatif comprenant l'outil rotatif, plongé dans le récipient ;
La figure 2 illustre de face ladite machine de distribution de boissons, sans le récipient, le dispositif d'agitation rotatif étant dans une position abaissée ;
La figure 3 schématise l'intérieur de la machine de distribution de boisson, notamment le système de production d'eau chaude et de vapeur, selon une mise en oeuvre ;
La figure 4 illustre plus en détail une conception du dispositif d'agitation rotatif, selon une mise en oeuvre préférentielle ;
La figure 5 illustre plus en détail l'outil rotatif sur le dispositif d'agitation rotatif, selon une mise en oeuvre préférentielle ;
La figure 6 illustre un filtre de type panier conçu pour être placé directement dans le récipient et recevoir un ingrédient à infuser, notamment du thé en vrac ;
La figure 7 illustre ledit filtre placé directement dans le récipient, l'outil rotatif étant plongé dans le filtre ;
La figure 8 schématise les différentes étapes du procédé de préparation d'une boisson très chaude, selon une première réalisation ;
La figure 9 schématise les différentes étapes du procédé de préparation d'une boisson très chaude, selon une seconde réalisation ;
La figure 10 schématise les différentes étapes du procédé de préparation d'une boisson très chaude, selon une troisième réalisation.

### Description détaillée

Dans la suite de la description, le terme machine est utilisé pour désigner la machine de distribution de boissons. De même, le terme procédé est utilisé pour désigner le procédé de préparation d'une boisson très chaude selon l'invention.

Dans la suite de la description, les termes relatifs à la position dans l'espace tels que : «horizontal», «vertical», «inférieur», «supérieur», «haut», «bas», «gauche», «droite» ... qui pourraient être employés, le seront en considération de la position de la machine reposant sur un plan de travail, en situation d'usage, avec le dispositif d'agitation rotatif disposé face à l'utilisateur.

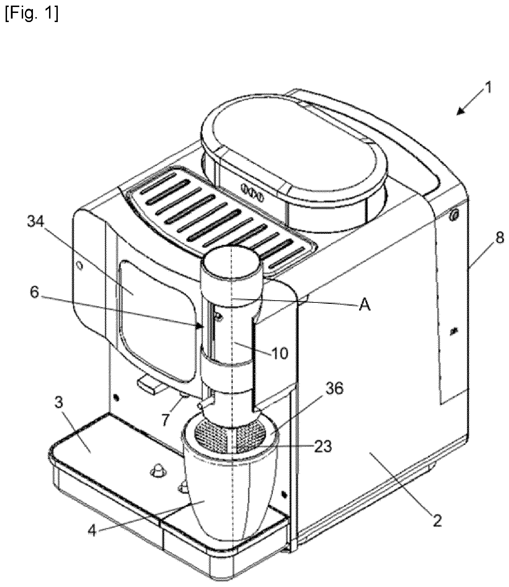

En regard des figures 1 à 3, la machine 1 comprend un bâti 2, un support 3 sur lequel un récipient 4 peut être disposé durant la préparation d'une boisson, un dispositif de distribution 5, un dispositif d'agitation rotatif 6 permettant d'agiter une préparation contenue dans le récipient 4 et une buse 7 permettant la distribution d'une boisson à base de café et/ou de chocolat, par exemple. Le dispositif de distribution 5 comporte un réservoir 8 contenant de l'eau froide et permet d'alimenter le dispositif d'agitation rotatif 6 en eau chaude et/ou en vapeur et la buse 7 en boisson infusée ou non (café, chocolat...).

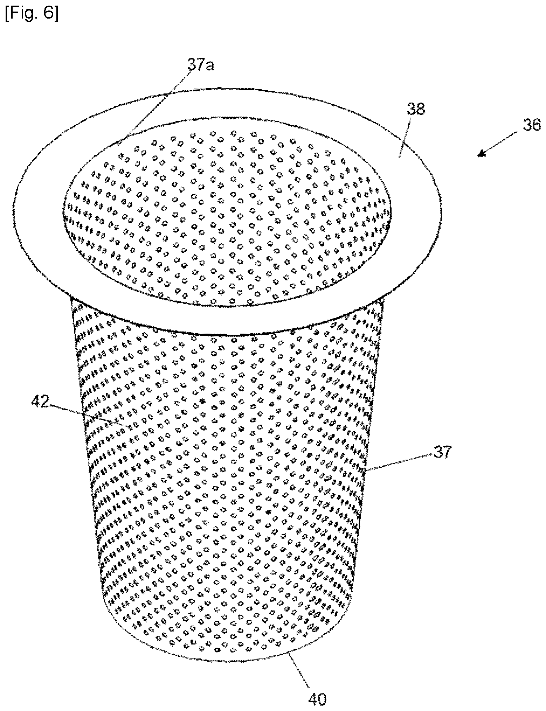

Le dispositif d'agitation rotatif 6 comprend un outil rotatif 9 autour d'un axe A et destiné à coopérer avec une préparation de boisson contenue dans le récipient 4. Cet axe A est défini verticalement sur la machine 1. Le dispositif d'agitation rotatif 6 est monté en translation selon l'axe A, à l'intérieur d'une pièce de guidage 10 agencée sur le bâti 2, de sorte à permettre son déplacement selon une position relevée (non illustrée sur les figures) où l'outil rotatif 9 est dégagé du récipient 4 de sorte à permettre le dégagement dudit récipient 4, et une position abaissée illustrée en figures 1, 2 et 6, où l'outil rotatif 9 est inséré dans le récipient 4 placé sur le support 3 sous ledit dispositif d'agitation rotatif 6.

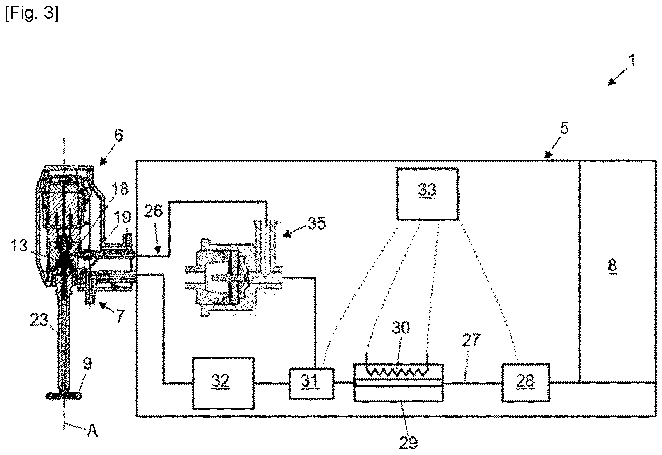

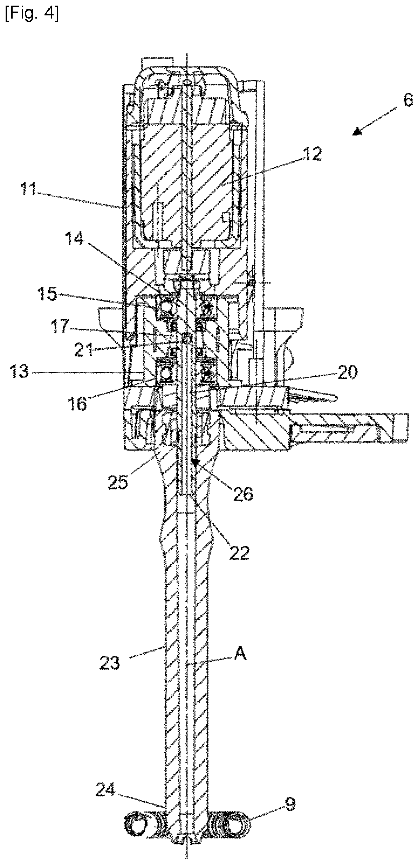

La mise en oeuvre du dispositif d'agitation rotatif 6 tel qu'illustré sur les figures 3 et 4 est déjà connue sur des machines de distribution de boissons développées par la Demanderesse, l'homme du métier pouvant s'y référer. Comme l'illustre la figure 4, le dispositif d'agitation rotatif 6 comporte un corps 11 monté en translation selon l'axe A à l'intérieur de la pièce de guidage 10. A l'intérieur du corps 11 sont agencés un moteur électrique 12 et une boîte à vapeur 13. Le moteur électrique 12 entraîne en rotation selon l'axe A un arbre d'entrainement 14, lequel est monté en liaison pivot d'axe A vis-à-vis de la boîte à vapeur 13 au moyen de deux paliers 15, 16 de roulement étanche, l'étanchéité mise en oeuvre entre la boîte à vapeur 13, les paliers 15, 16 et l'arbre d'entraînement 14 permettant de définir une chambre 17. Un canal radial 18 (illustré en figure 3) traverse la boîte à vapeur 13 et débouche dans la chambre 17, ce canal radial 18 étant raccordé à un conduit souple 19 (illustré en figure 3) qui permet les déplacements en translation selon l'axe A du dispositif d'agitation rotatif 6 vis-à-vis de la pièce de guidage 10 sans aucune gêne, entre la position relevée et la position abaissée. Le conduit souple 19 alimente en eau chaude et/ou en vapeur la chambre 17. L'arbre d'entrainement 14 présente une partie creuse 20 s'étendant selon l'axe A et débouchant d'un côté dans la chambre 17 grâce à un orifice 21 traversant ladite partie creuse 20 et, de l'autre côté, sur l'extrémité inférieure 22 de l'arbre d'entraînement 14. Tel qu'illustré sur les figures 3 et 4, le dispositif d'agitation rotatif 6 comprend une partie tubulaire 23 qui s'étend selon l'axe A. L'extrémité inférieure 24 de la partie tubulaire 23 est assemblée avec l'outil rotatif 9, de préférence par emboîtement ou au moyen d'un assemblage à baïonnette. L'extrémité supérieure 25 de la partie tubulaire 23 est accouplée de manière amovible avec l'arbre d'entrainement 14. Ainsi, le canal souple 19, le conduit radial 18, la chambre 17, la partie creuse 20 de l'arbre d'entraînement 14 et la partie tubulaire 23 définissent un conduit d'acheminement 26 d'eau chaude et/ou de vapeur vers l'outil rotatif 9.

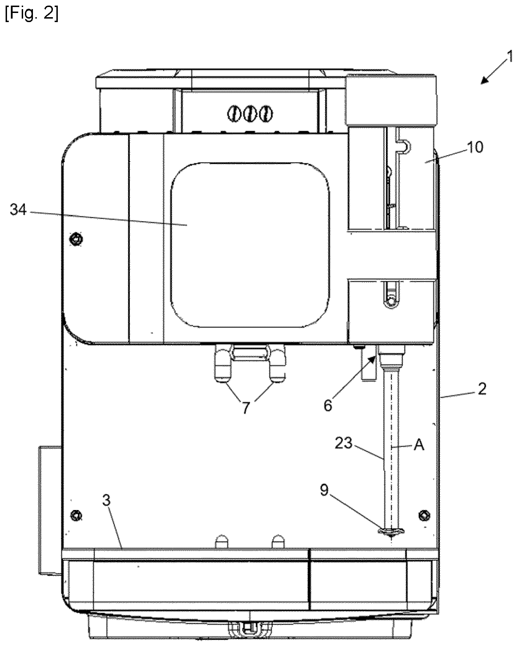

Tel que schématisé sur la figure 3, le dispositif de distribution 5 de la machine 1 comprend un circuit d'alimentation 27 qui comporte une pompe 28 et une chaudière 29 incorporant un élément de chauffe 30. Le circuit d'alimentation 27 est raccordé en amont au réservoir 8 et en aval à une électrovanne 31 qui permet soit d'alimenter en eau chaude et/ou en vapeur le conduit d'acheminement 26 du dispositif d'agitation rotatif 6, soit d'alimenter en eau chaude une chambre d'infusion 32 qui est elle-même raccordée à la buse 7. Un circuit de commande 33 permet d'actionner la pompe 28, l'élément de chauffe 30 de la chaudière 29 et l'électrovanne 31 en fonction du programme de préparation de boisson s'électionner sur la machine 1 qui comporte pour cela un clavier de commande 34 (figures 1 et 2) permettant de sélectionner une préparation de boisson.

Lorsque la machine 1 fonctionne en mode de préparation d'une boisson de type café, par exemple, le circuit de commande 33 actionne la pompe 28 et l'élément de chauffe 30 pour produire une eau chaude à une température de l'ordre de 80°C à 96°C selon la boisson et commande l'électrovanne 31 pour alimenter la chambre d'infusion 32, la boisson infusée s'évacuant par la buse 7 pour être déversée dans un récipient 4 placé sur le support 3, sous ladite buse 7.

Lorsque la machine 1 fonctionne en mode de préparation d'un thé qui nécessite un temps d'infusion plus long, de l'ordre de trois à quatre minutes, le circuit de commande 33 actionne la pompe 28 et l'élément de chauffe 30 pour produire une eau chaude à une température de 70°C à 95°C selon le type de thé et commande l'électrovanne 31 pour alimenter le conduit d'acheminement 26, l'eau chaude s'évacuant par l'extrémité inférieure 24 de la partie tubulaire 23 qui est assujettie à l'outil rotatif 9 et plongée dans la préparation contenue dans le récipient 4, placé sous ledit dispositif d'agitation rotatif 6.

De la même manière, la machine 1 permet la production de vapeur pour la préparation de certaines boissons à base de mousse de lait ou d'une crème fouettée et aussi pour la préparation de certaines boissons très chaudes à base de thé notamment, comme cela sera précisé ensuite. Dans ce cas, le circuit de commande 33 actionne la pompe 28 et l'élément de chauffe 30 pour produire une eau chaude à une température supérieure à 100°C afin de générer de la vapeur et commande l'électrovanne 31 pour alimenter le conduit d'acheminement 26, ladite vapeur s'évacuant par l'extrémité inférieure 24 de la partie tubulaire 23 qui est assujettie à l'outil rotatif 9 et plongée dans la préparation contenue dans le récipient 4.

Sur la figure 3 est illustré un clapet de mise à l'air 35 développé par la Demanderesse, ayant pour fonction d'éviter un encrassement de la partie tubulaire 23. En effet, l'arrêt de l'élément de chauffe 30 de la chaudière 29 engendre le refroidissement de la vapeur résiduelle se trouvant dans le conduit d'acheminement 26. Cette vapeur résiduelle condense, ce qui génère une aspiration par ledit conduit d'acheminement 26 ; il en résulte une remontée de la préparation de boisson contenue dans le récipient 4, à l'intérieur de la partie tubulaire 23 plongée dans ladite préparation de boisson, ce qui a pour incidence de l'encrasser. Ledit clapet de mise à l'air 35 permet d'empêcher la préparation de boisson dans le récipient de remonter de manière trop importante à l'intérieur de la partie tubulaire 23, suffisamment pour éviter que ladite préparation de boisson atteigne l'extrémité inférieure 22 de l'arbre d'entraînement 14 et remonte dans la chambre 17 du conduit d'acheminement 26, laquelle n'est pas accessible par l'utilisateur et peut donc être difficilement nettoyée. Cette mise à l'air du conduit d'acheminement 26 permet également de faire baisser la température de la chaudière 29 à la suite d'une production de vapeur. Cela permet avantageusement d'éviter de trop chauffer l'eau lorsqu'après l'utilisation du dispositif d'agitation rotatif 6, l'utilisateur réalise immédiatement une infusion de café ; une eau trop chaude issue de la chaudière 29 et injectée dans la chambre d'infusion 32 aurait pour effet de brûler le café.

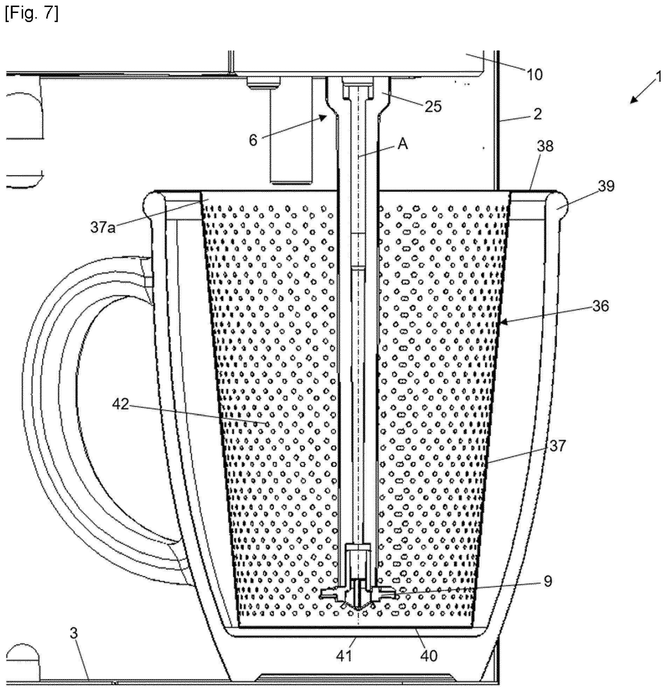

En regard des figures 1, 6 et 7, la machine 1 comprend un panier de réception 36 qui permet la réception d'un ingrédient à infuser, notamment du thé. Le panier de réception 36 présente de préférence un contour 37 de forme cylindrique ou légèrement conique de dimensions adaptées pour permettre son insertion dans le récipient 4. Un rebord 38 est défini à l'extrémité supérieure 37a dudit contour 37, ce rebord 38 reposant sur le bord supérieur 39 du récipient 4 lors de l'introduction du panier de réception 36 à l'intérieur du récipient 4. Lorsque le dispositif d'agitation rotatif 6 est en position abaissée telle qu'illustrée en figures 1 et 7 et qu'un récipient 4 incorporant un panier de réception 36 est posé sur le support 3, sous ledit dispositif d'agitation rotatif 6, la partie tubulaire 23 est plongée dans le panier de réception 36 et l'outil rotatif 9 est placé à proximité du fond 40 dudit panier de réception 36, lui-même placé à proximité du fond 41 du récipient 4, comme l'illustre la figure 7. Le panier de réception 36 est muni de perforations 42 sur son contour 37 et, de préférence sur son fond 40, afin de filtrer la préparation de boisson lors de l'extraction du panier de réception 36 hors du récipient 4, une fois la boisson prête.

Le panier de réception 36 permet notamment la réception de feuilles de thé en vrac. Lors de la préparation d'une boisson de thé, l'eau doit être chaude voire très chaude, selon le type de thé, mais non bouillante. En effet, la température de l'eau peut être comprise entre 60°C et 96°C selon le type de thé. De même, le temps d'infusion du thé varie selon le type de thé. Ainsi, en général, des thés blancs infuseront à une température de 60°C pendant une durée de 5 à 6 minutes ; des thés verts infuseront à une température de 75-80°C pendant une durée de 3 minutes ; des thés noirs infuseront à une température entre 85°C et 95°C, de préférence entre 90°C et 95°C pendant une durée de 4 minutes ; des thés bleus infuseront à une température de l'ordre de 95°C pendant une durée de 4 à 5 minutes ; et des infusions infuseront à une température approchant les 100°C pendant une durée de 5 à 10 minutes. Ainsi, selon la boisson à base de thé à préparer, les conditions de préparation de la boisson diffèrent largement.

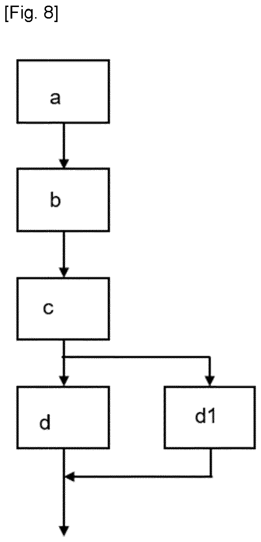

Les figures 8 à 10 permettent de comprendre les différentes étapes de préparation d'une boisson très chaude à infuser, nécessitant une température d'eau d'au moins 80°C. Lors de la préparation d'une boisson chaude faisant usage du dispositif d'agitation rotatif 6, dans une première étape (étape a), l'utilisateur place le récipient 4 sur le support 3, sous le dispositif d'agitation rotatif 6, puis il place l'outil rotatif 9 dans ledit récipient 4. Lorsque cette boisson est à base de thé, l'utilisateur pourra préalablement placer des feuilles de thé dans le panier de réception 36 et insérer ledit panier de réception 36 dans le récipient 4. Dans une seconde étape (étape b), l'utilisateur sélectionne sa boisson sur le clavier 34 puis lance la préparation de boisson grâce à l'interface entre le clavier 34 et le circuit de commande 33. Les informations quant à la sélection de la boisson et le lancement de la préparation sont communiquées au circuit de commande 33 qui, dans une troisième étape (étape c), agit sur la pompe 28, l'élément de chauffe 30 et l'électrovanne 31 pour délivrer un volume V d'eau chaude par le conduit d'acheminement 26, l'eau chaude s'écoulant par l'extrémité inférieure 24 de la partie tubulaire 23, au niveau de l'outil rotatif 9 placé dans le récipient 4, par l'intermédiaire ou non du panier de réception 36 préalablement positionné dans le récipient 4 avec l'ingrédient à infuser, notamment du thé. L'ajout de l'ingrédient à infuser, dans le récipient 4 ou dans le panier de réception 36 placé dans ledit récipient 4, pourrait être réalisé à la fin de la troisième étape (étape c), une fois que le circuit de commande 33 a terminé la délivrance du volume V d'eau chaude, l'outil rotatif 9 étant dégagé du récipient 4 en déplaçant le dispositif d'agitation rotatif 6 dans la position relevée pour accéder audit récipient 4 contenant le volume V d'eau chaude.

Certaines boissons nécessitent une eau très chaude, c'est-à-dire une température supérieure ou égale à 80°C, tout particulièrement des boissons à base de feuilles de thé noir, de feuilles de thé bleu ou de feuilles d'infusions. Lorsque l'eau très chaude se déverse dans le récipient 4, par l'intermédiaire ou non du panier de réception 36, cette eau refroidit très rapidement à sa sortie de l'outil rotatif 9, perdant de l'ordre de 7°C, la température de l'eau chaude dans le récipient 4 n'étant alors plus optimale pour une parfaite infusion de l'ingrédient à infuser contenu dans le récipient 4 ou dans le panier de réception 36 placé dans ledit récipient 4. Pour ce type de préparation de boisson, la machine 1 met en oeuvre une quatrième étape (étape d) selon laquelle le circuit de commande 33 actionne la pompe 28 et l'élément de chauffe 30 pour produire une eau chaude à une température supérieure à 100°C et générer de la vapeur, la commande de l'électrovanne 31 permettant d'alimenter le conduit d'acheminement 26 de sorte que la vapeur s'évacue par l'extrémité inférieure 24 de la partie tubulaire 23 assujettie à l'outil rotatif 9 et plongée dans la préparation contenue dans le récipient 4 ou le panier de réception 36. L'injection de la vapeur dans le volume V d'eau chaude contenu dans le récipient 4 permet de réchauffer ce volume d'eau ou de préparation de boisson en cours d'infusion, pour lui restituer une température idéale d'infusion de l'ingrédient, d'au moins 80°C. Selon une réalisation, en particulier lorsque l'ingrédient est du thé noir, de la vapeur est injectée dans le récipient 4 ou le panier de réception 36 logé dans ledit récipient 4, de manière à amener l'eau à une température supérieure à 90°C. Le circuit de commande 33 est programmé pour déterminer la durée pendant laquelle de la vapeur est injectée dans la préparation de boisson contenue dans le récipient 4, en fonction du volume V d'eau chaude déversé dans ledit récipient 4.

La réchauffe de l'eau ou de la préparation de boisson en cours d'infusion dans le récipient 4, à une température dépassant les 80°C, engendre la formation de bulles qui peuvent causer des éclaboussures. Afin de pallier cet inconvénient, dans une cinquième étape (étape d1) réalisée pendant la quatrième étape (étape d), comme le montrent les figures 8 à 10, le circuit de commande 33 actionne le moteur électrique 12 pour faire tourner l'outil rotatif 9 et agiter l'eau chaude ou la préparation de boisson en cours de réalisation dans le récipient 4 et, ainsi, casser lesdites bulles, évitant les projections hors du récipient 4. De préférence, durant cette cinquième étape (étape d1), le circuit de commande 33 active en continu le moteur électrique 12 pour faire tourner l'outil rotatif 9 en marche continue à une vitesse v1. De préférence, le circuit de commande 33 est programmé pour que la durée de la quatrième étape (étape d) et celle la cinquième étape (étape d1) soient égales, l'injection de vapeur et la rotation de l'outil rotatif 9 dans le récipient contenant la préparation de boisson en cours d'infusion étant synchronisées. On peut toutefois envisager en variante de démarrer d'abord la quatrième étape (étape d) puis, avec un décalage, démarrer la cinquième étape (étape d1), lesdites étapes (étape d et d1) s'achevant en même temps.

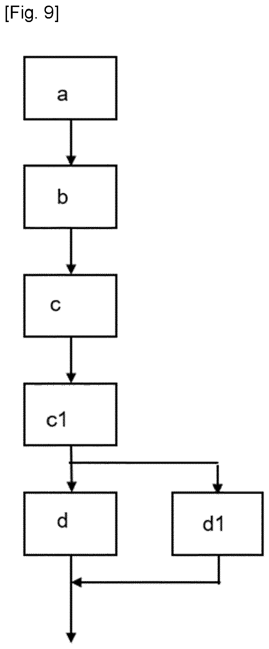

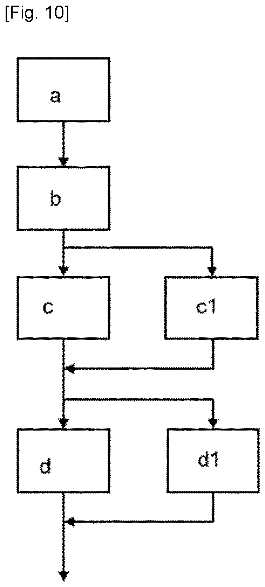

Lorsque la boisson réalisée comporte un ingrédient à infuser pouvant être introduit dans le récipient à la première étape (étape a) ou après la troisième étape (étape c), le circuit de commande 33 prévoit, dans une sixième étape (étape c1), d'actionner le moteur électrique 12 afin de faire tourner l'outil rotatif 9 pendant l'infusion de l'ingrédient. Lorsque l'ingrédient est introduit à la première étape (étape a) dans le récipient 4 ou dans le panier de réception 36 logé dans ledit récipient 4, cette sixième étape (étape c1) peut être lancée après la troisième étape (étape c), comme l'illustre la figure 9, ou pendant la troisième étape (étape c), comme l'illustre la figure 10. Lorsque l'ingrédient est introduit à la troisième étape (étape c) dans le récipient 4 ou dans le panier de réception 36 logé dans ledit récipient 4, cette sixième étape (étape c1) est lancée après la troisième étape (étape c), comme l'illustre la figure 9. L'activation de l'outil rotatif 9 durant l'infusion de l'ingrédient favorise cette infusion. De préférence, durant cette sixième étape (étape c1), le circuit de commande 33 active le moteur électrique 12 afin de faire tourner l'outil rotatif 9 de manière intermittente à une vitesse de rotation v2, le moteur électrique 12 étant actionné pendant un temps T1 et arrêté pendant un temps T2. De préférence, le rapport entre le temps T1 et le temps T2 est supérieur à 0,1. Pendant la cinquième étape (étape d1), le circuit de commande 33 fait tourner l'outil rotatif 9 de manière continue à la vitesse v1, tel que précisé précédemment ; de préférence, le circuit de commande 33 est programmé pour que le rapport entre v1 et v2 soit supérieur à 0,5.

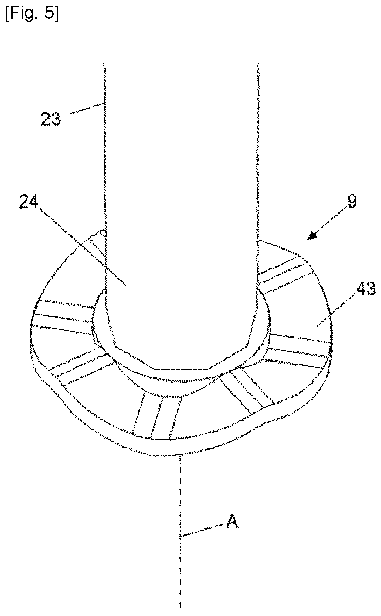

Les figures 5 et 7 illustrent une mise en oeuvre préférentielle de l'outil rotatif 9 qui comporte une ailette périphérique 43 favorisant un entraînement de l'ingrédient durant la rotation dudit outil rotatif 9 sans que ledit ingrédient ne se prenne dans ladite ailette périphérique 43. Cela est tout particulièrement avantageux lorsque l'ingrédient est / se compose de des feuilles de thé en vrac.

Ainsi, la machine 1 selon l'invention met en oeuvre un procédé qui permet le réchauffement de l'eau chaude ou de la préparation en cours d'infusion afin de préserver une eau très chaude, supérieure ou égale à 80°C selon l'ingrédient, pour préserver une température optimale d'infusion, voire de dilution, selon la nature dudit l'ingrédient. Un usage préférentiel du procédé selon l'invention étant pour l'infusion du thé, tout particulièrement de thés nécessitant une température de l'eau chaude supérieure ou égale à 90°C, par exemple des thés noirs.

## Revendications

1. Procédé de préparation d'une boisson très chaude dans un récipient (4) à partir d'une machine de distribution de boissons (1) comportant un circuit de commande (33), un générateur d'eau chaude et/ou de vapeur (29) et un dispositif d'agitation rotatif (6) comprenant un outil rotatif (9) autour d'un axe A et destiné à coopérer avec une boisson contenue dans le récipient (4), ledit dispositif d'agitation rotatif (6) comportant un conduit d'acheminement d'eau chaude et/ou de vapeur (26) vers l'outil rotatif (9), le procédé comportant les étapes :
a) placer le récipient (4) sur un support (3), sous le dispositif d'agitation rotatif (6) puis placer l'outil rotatif (9) dans ledit récipient (4),
b) sélectionner et lancer une préparation à base d'eau très chaude à partir du circuit de commande (33),
c) injecter un volume V d'eau chaude par le conduit d'acheminement d'eau chaude et/ou de vapeur (26),
après l'étape c), une étape d) consistant à :
d) injecter de la vapeur par le conduit d'acheminement (26) pour amener l'eau à une température supérieure à 80°C,
puis pendant l'étape d), une étape d1) consistant à :
d1) mettre en marche l'outil rotatif (9) pour agiter la préparation et casser les bulles qui se forment dans la préparation sous l'action de la vapeur et ainsi éviter les projections hors du récipient (4),
le procédé étant **caractérisé en ce que** la boisson réalisée comporte un ingrédient à infuser pouvant être introduit dans le récipient (4) à l'étape a) ou
après l'étape c), et **en ce que** le procédé comporte à la fin de l'étape c), une étape c1) consistant à :
c1) mettre en marche l'outil rotatif (9) pendant l'infusion de l'ingrédient,
le récipient (4) comportant un panier de réception (36) de l'ingrédient à infuser, notamment de feuilles de thé.

2. Procédé de préparation d'une boisson très chaude selon la revendication 1, **caractérisé en ce qu'**à l'étape d) on injecte de la vapeur par le conduit d'acheminement (26) pour amener l'eau à une température supérieure à 90°C.

3. Procédé de préparation d'une boisson très chaude selon l'une quelconque des revendications 1 à 2, **caractérisé en ce que** pendant l'étape d1) l'outil rotatif (9) est mis en marche de manière continue à une vitesse v1.

4. Procédé de préparation d'une boisson très chaude selon la revendication 3, **caractérisé en ce que** la durée de l'étape d) est égale à la durée de l'étape d1).

5. Procédé de préparation d'une boisson très chaude selon la revendication 1, **caractérisé en ce que** pendant l'étape c1) l'outil rotatif (9) est mis en marche de manière intermittente à une vitesse de rotation v2, l'outil rotatif (9) étant mis en marche pendant un temps T1 et arrêté pendant un temps T2.

6. Procédé de préparation d'une boisson très chaude selon la revendication 5, caractérisé en ce le rapport entre le temps T1 et le temps T2 est supérieur à 0,1.

7. Procédé de préparation d'une boisson très chaude selon l'une quelconque des revendications 5 à 6, **caractérisé en ce que** pendant l'étape d1) l'outil rotatif (9) est mis en marche de manière continue à une vitesse v1 et **en ce que** le rapport entre v1 et v2 est supérieur à 0,5.

8. Procédé de préparation d'une boisson très chaude selon l'une quelconque des revendications 1 à 7, **caractérisé en ce que** l'ingrédient à infuser est du thé noir et **en ce qu'**à l'étape d) on injecte de la vapeur par le conduit d'acheminement pour amener l'eau à une température supérieure à 90°C.

9. Procédé de préparation d'une boisson très chaude selon l'une quelconque des revendications 1 à 8, **caractérisé en ce que** l'outil rotatif (9) comporte une ailette périphérique (43).

## Patentansprüche

1. Verfahren zur Zubereitung eines sehr heißen Getränks in einem Behälter (4) aus einem Getränkeautomaten (1), der einen Regelkreis (33), einen Heißwasser- und/oder Dampferzeuger (29) und eine Drehrührvorrichtung (6) umfasst, die ein um eine Achse A drehendes Werkzeug (9) umfasst und dazu bestimmt ist, mit einem Getränk zusammenzuwirken, das in dem Behälter (4) enthalten ist, wobei die Drehrührvorrichtung (6) eine Leitung zum Zuführen von heißem Wasser und/oder Dampf (26) zum Drehwerkzeug (9) umfasst, wobei das Verfahren die folgenden Schritte umfasst:
a) Platzieren des Behälters (4) auf einem Träger (3) unter der Drehrührvorrichtung (6), und anschließend Platzieren des Drehwerkzeugs (9) in dem Behälter (4),
b) Auswählen und Starten einer Zubereitung auf Grundlage von sehr heißem Wasser aus dem Regelkreis (33),
c) Einspritzen eines Volumens V heißes Wasser durch die Leitung zum Zuführen von heißem Wasser und/oder Dampf (26),
nach Schritt c) einen Schritt d), bestehend im:
d) Einspritzen von Dampf durch die Zuführleitung (26), um das Wasser auf eine Temperatur von mehr als 80 °C zu bringen,
anschließend, während Schritt d) einen Schritt d1), bestehend im:
d1) Einschalten des Drehwerkzeugs (9), um die Zubereitung zu rühren und die Blasen, die sich unter der Wirkung des Dampfes in der Zubereitung bilden, zu zerplatzen und somit Spritzer aus dem Behälter (4) heraus zu verhindern,
wobei das Verfahren **dadurch gekennzeichnet ist, dass** das hergestellte Getränk eine aufzugießende Zutat umfasst, die in Schritt a) oder nach Schritt c) in den Behälter (4) eingeführt werden kann, und dadurch, dass das Verfahren am Ende von Schritt c) einen Schritt c1) umfasst, bestehend im:
c1) Einschalten des Drehwerkzeugs (9) während des Aufgusses der Zutat, wobei der Behälter (4) einen Korb zur Aufnahme (36) der aufzugießenden Zutat, insbesondere von Teeblättern, umfasst.

2. Verfahren zur Zubereitung eines sehr heißen Getränks nach Anspruch 1, **dadurch gekennzeichnet, dass** in Schritt d) Dampf durch die Zuführleitung (26) eingespritzt wird, um das Wasser auf eine Temperatur von mehr als 90 °C zu bringen.

3. Verfahren zur Zubereitung eines sehr heißen Getränks nach einem der Ansprüche 1 bis 2, **dadurch gekennzeichnet, dass** während Schritt d1) das Drehwerkzeug (9) durchgehend mit einer Geschwindigkeit v1 eingeschaltet wird.

4. Verfahren zur Zubereitung eines sehr heißen Getränks nach Anspruch 3, **dadurch gekennzeichnet, dass** die Dauer von Schritt d) gleich der Dauer von Schritt d1) ist.

5. Verfahren zur Zubereitung eines sehr heißen Getränks nach Anspruch 1, **dadurch gekennzeichnet, dass** während Schritt c1) das Drehwerkzeug (9) intermittierend mit einer Drehgeschwindigkeit v2 eingeschaltet wird, wobei das Drehwerkzeug (9) während einer Zeit T1 eingeschaltet und während einer Zeit T2 angehalten wird.

6. Verfahren zur Zubereitung eines sehr heißen Getränks nach Anspruch 5, **dadurch gekennzeichnet, dass** das Verhältnis zwischen der Zeit T1 und der Zeit T2 größer als 0,1 ist.

7. Verfahren zur Zubereitung eines sehr heißen Getränks nach einem der Ansprüche 5 bis 6, **dadurch gekennzeichnet, dass** während Schritt d1) das Drehwerkzeug (9) durchgehend mit einer Geschwindigkeit v1 eingeschaltet wird, und dadurch, dass das Verhältnis zwischen v1 und v2 größer als 0,5 ist.

8. Verfahren zur Zubereitung eines sehr heißen Getränks nach einem der Ansprüche 1 bis 7, **dadurch gekennzeichnet, dass** die aufzugießende Zutat schwarzer Tee ist, und dadurch, dass in Schritt d) Dampf durch die Zuführleitung eingespritzt wird, um das Wasser auf eine Temperatur von mehr als 90 °C zu bringen.

9. Verfahren zur Zubereitung eines sehr heißen Getränks nach einem der Ansprüche 1 bis 8, **dadurch gekennzeichnet, dass** das Drehwerkzeug (9) einen umlaufenden Flügel (43) umfasst.

## Claims

1. Method for preparing a very hot beverage in a container (4) by a beverage dispensing machine (1) comprising a control circuit (33), a hot water and/or steam generator (29) and a rotary stirring device (6) comprising a rotary tool (9) about an axis A and intended to cooperate with a beverage contained in the container (4), said rotary stirring device (6) comprising a delivery conduit for delivering hot water and/or steam (26) to the rotary tool (9), the method comprising the steps of:
a) placing the container (4) on a support (3), below the rotary stirring device (6) then placing the rotary tool (9) into said container (4),
b) selecting and initiating a preparation with a very hot water base by the control circuit (33),
c) injecting a volume V of hot water through the hot water and/or steam delivery conduit (26),
after the step c), a step d) consisting of:
d) injecting steam through the delivery conduit (26) to bring the water to a temperature above 80°C,
then during step d), a step d1) consisting of:
d1) operating the rotary tool (9) to stir the preparation and break the bubbles that are formed in the preparation under the action of the steam and thus prevent splashing out of the container (4),
the method being **characterized in that** the beverage made comprises an ingredient to be infused that can be introduced into the container (4) in the step a) or after the step c), and **in that** the method comprises at the end of step c), a step c1) consisting of:
c1) operating the rotary tool (9) during the infusion of the ingredient, the container (4) comprising a basket for receiving (36) the ingredient to be infused, in particular tea leaves.

2. Method for preparing a very hot beverage according to claim 1, **characterized in that** in the step d) steam is injected through the delivery conduit (26) to bring the water to a temperature above 90°C.

3. Method for preparing a very hot beverage according to any of claims 1 to 2, **characterized in that** during the step d1) the rotary tool (9) is operated continuously at a speed v1.

4. Method for preparing a very hot beverage according to claim 3, **characterized in that** the duration of the step d) is equal to the duration of the step d1).

5. Method for preparing a very hot beverage according to claim 1, **characterized in that** during the step c1) the rotary tool (9) is operated intermittantly at a rotation speed v2, the rotary tool (9) being operated for a time T1 and stopped for a time T2.

6. Method for preparing a very hot beverage according to claim 5, **characterized in that** the ratio between the time T1 and the time T2 is greater than 0.1.

7. Method for preparing a very hot beverage according to any of claims 5 to 6, **characterized in that** during the step d1) the rotary tool (9) is operated continuously at a speed v1 and **in that** the ratio between v1 and v2 is greater than 0.5.

8. Method for preparing a very hot beverage according to any of claims 1 to 7, **characterized in that** the ingredient to be infused is black tea and **in that** in the step d) steam is injected through the delivery conduit to bring the water to a temperature above 90°C.

9. Method for preparing a very hot beverage according to any of claims 1 to 8, **characterized in that** the rotary tool (9) comprises a peripheral fin (43).
